(19) Europäisches Patentamt
European Patent Office
Office européen des brevets

(11) **EP 1 992 915 B1**

(12) **EUROPÄISCHE PATENTSCHRIFT**

(45) Veröffentlichungstag und Bekanntmachung des Hinweises auf die Patenterteilung:
**06.11.2013 Patentblatt 2013/45**

(51) Int Cl.:
***G01D 5/38*** *(2006.01)*

(21) Anmeldenummer: **08008335.5**

(22) Anmeldetag: **02.05.2008**

(54) **Positionsmesseinrichtung**

Position measuring device

Dispositif de mesure de position

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.05.2007 DE 102007023305**
**13.02.2008 DE 102008008873**

(43) Veröffentlichungstag der Anmeldung:
**19.11.2008 Patentblatt 2008/47**

(73) Patentinhaber: **Dr. Johannes Heidenhain GmbH 83301 Traunreut (DE)**

(72) Erfinder: **Hermann, Michael 83342 Tacherting (DE)**

(56) Entgegenhaltungen:
**WO-A2-2007/034379 US-A- 5 760 959**

**Beschreibung**

Die Erfindung betrifft eine Positionsmesseinrichtung.

Interferentielle Positionsmesseinrichtungen basierend auf der Abtastung von Maßstäben mit optischen Gittern sind beispielsweise in der EP 0163362 B1 beschrieben. Auch die US 5760959 A beschreibt so eine Positionsmesseinrichtung. In beiden Dokumenten liegen Maßstab und Abtastgitter parallel zueinander, so dass nur Relativbewegungen in Messrichtung erlaubt sind. Bewegungen quer zur Messrichtung würden eine Positionsmessung unmöglich machen.

Eine Positionsmesseinrichtung basierend auf Maßstäben mit Gitterstrukturen und optischer Abtastung ist auch in der WO 2007/034379 A2 beschrieben. Senkrecht zueinander ausgedehnte Gitter ermöglichen hier eine Bewegung quer zur Messrichtung, ohne die Positionsmessung in Messrichtung zu stören. Nachteilig an dieser Positionsmesseinrichtung ist, dass an einem Umlenkelement reflektierte Teilstrahlen unterschiedlicher Richtung nicht parallel zum Detektor laufen, und damit deren Auftreffpunkt beim Detektor vom Abstand des Umlenkelements zum Detektor abhängig ist.

Aufgabe der Erfindung ist es, eine Positionsmesseinrichtung zu schaffen, bei der der Auftreffpunkt von an einem Umlenkelement reflektierten Teilstrahlen unabhängig vom Abstand des Umlenkelements zum Detektor ist.

Diese Aufgabe wird gelöst durch eine Vorrichtung mit den Merkmalen des Anspruches 1.

Weitere Vorteile sowie Einzelheiten der vorliegenden Erfindung ergeben sich aus der nachfolgenden Beschreibung einer bevorzugten Ausführungsform anhand der Figuren. Dabei zeigt

Figur 0    eine Positionsmesseinrichtung nach dem Stand der Technik,

Figur 1    eine Übersicht über eine Positionsmesseinrichtung,

Figur 2    einen Strahlengang in einer Positionsmesseinrichtung,

Figur 3    eine Vorrichtung zum Umlenken von Lichtstrahlen,

Figur 4    einen Strahlengang in einer Positionsmesseinrichtung,

Figur 5    ein Abtastgitter mit Blenden,

Figur 6    ein weiteres Ausführungsbeispiel einer Positionsmesseinrichtung,

Figur 7    eine alternative Ausführung eines Umlenkelements.

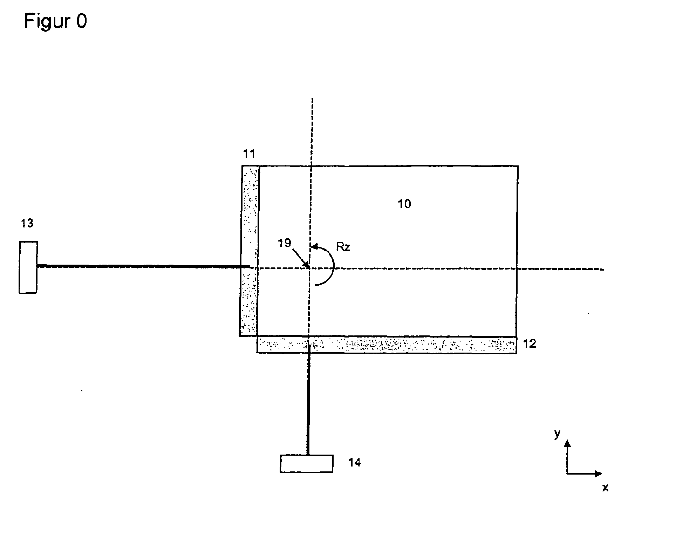

Eine typische Messaufgabe für eine Positionsmesseinrichtung ist in Figur 0 dargestellt. Dabei wird ein Objekt 10 in der Ebene in x- und y-Richtung bewegt. Die Positionsmessung in x- und y-Richtung dieses Objekts soll in Bezug auf einen Punkt erfolgen, der im Folgenden als Centerpoint 19 bezeichnet wird.

Erfolgt die Messung der x- und y-Position in Verlängerung der Parallelen der x-Achse bzw. der Parallelen der y-Achse durch den Centerpoint, so spricht man von einer Abbe - kompensierten Messung, da eine Verdrehung Rz des Objekts um den Centerpoint keinen Einfluss auf den Positionswert hat. Üblicherweise werden für solche Messaufgaben Interferometer verwendet, wobei die Messreflektoren 11 und 12 am beweglichen Objekt befestigt werden und jeweils senkrecht zur Messrichtung ausgedehnt sind. Dadurch ist gewährleistet, dass bei Bewegung des Objekts senkrecht zur Messrichtung der Interferometerstrahl immer zurück zur Auswerteeinheit 13 und 14 reflektiert wird.

Da der Messstrahl des Interferometers Wegstrecken in Luft von einigen Millimetern bis zu Metern zurücklegen muss, gehen die Brechungsindexschwankungen der Luft sehr kritisch in das Messergebnis ein.

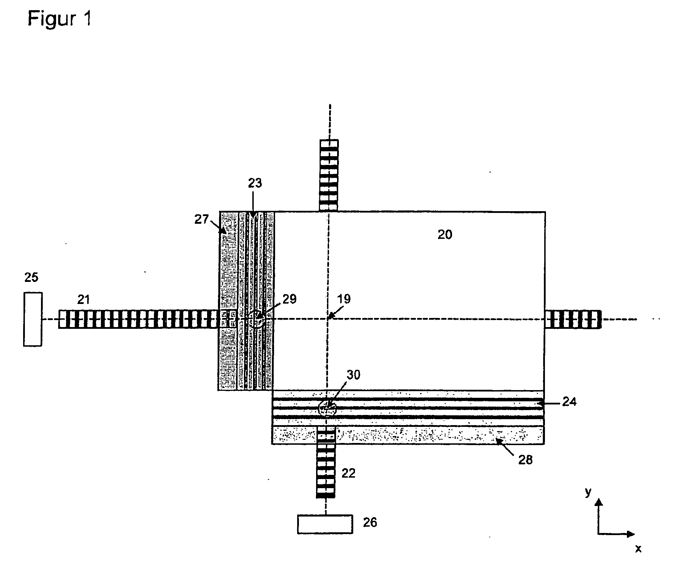

Eine Positionsmesseinrichtung gemäß der oben zitierten WO 2007/034379 A2 entsprechend Figur 1 verwendet anstelle von Interferometern so genannte Gitterinterferometer.

Es werden für jede Messrichtung lineare Gitter verwendet, die im Folgenden als Maßstabsgitter bezeichnet werden. Die Maßstabsgitter sind ausgedehnt in der jeweiligen Messrichtung, für die x-Richtung Maßstabsgitter 21 und für die y-Richtung Maßstabsgitter 22. Die für die optische Abtastung im Sinne eines Gitterinterferometers notwendigen Abtastgitter 23 und 24 sind senkrecht zur jeweiligen Messrichtung ausgedehnt und fest mit dem sich bewegenden Objekt 20 verbunden. Die Beleuchtungs- und Detektionseinheiten 25, 26 für jede Achse sind ortsfest und werden nicht bewegt.

Um das Licht für die Messachsen von den Beleuchtungseinheiten zu den Abtaststellen 29, 30 zu lenken, werden senkrecht zu den Messrichtungen ausgedehnte Umlenkelemente 27, 28 verwendet, welche ebenfalls mit dem zu bewegenden Objekt 20 verbunden sind. Diese Umlenkelemente dienen auch dazu, das Licht von den Abtaststellen wieder zurück zu den Detektionseinheiten zu lenken.

Im Folgenden wird nun detaillierter auf die Erfindung eingegangen, dabei wird nur noch die x-Achse beschrieben, für die y-Achse gilt Entsprechendes.

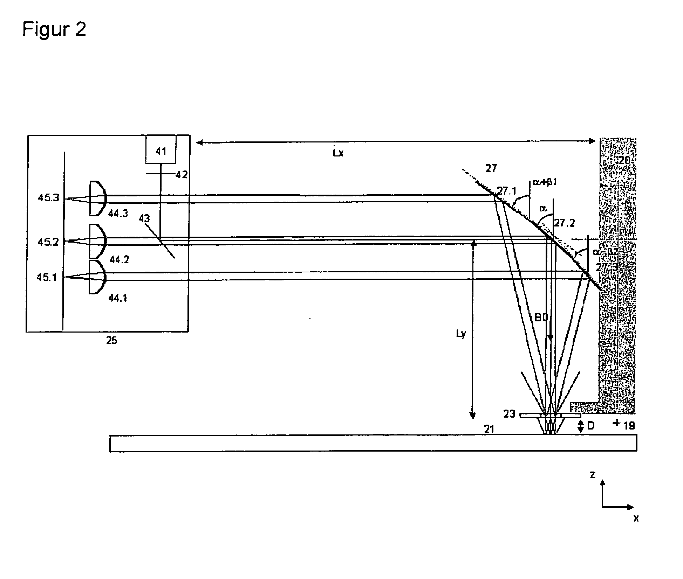

Ein erstes Ausführungsbeispiel der Erfindung zeigt Figur 2.

In der Beleuchtungs- und Detektioneinheit 25 befindet sich eine Lichtquelle 41 (hierbei kann es sich z.B. um eine Laserdiode oder eine LED handeln), deren Licht mit dem Element 42 (z.B. einer Linse) so kollimiert wird, dass es eine geringe Divergenz aufweist, um bei sich ändernden Abständen Lx zwischen dem bewegten Objekt 20 und der Beleuchtungs- und Detektionseinheit 25 möglichst gleich bleibende Verhältnisse im Strahlquerschnitt zu erhalten. Mit einem Umlenkelement 43 wird der Strahl entlang der Messrichtung X auf das zu messende und bewegte Objekt 20 gelenkt. Das Umlenkelement 43 ist derart ausgerichtet, dass die Verlängerung des Strahls in x-Richtung die Normale der x-y-Ebene, welche durch den Centerpoint geht, schneidet. Am bewegten und zu messenden Objekt gelangt der Strahl auf ein Umlenkelement 27, welches senkrecht zur Messrichtung über die ganze Länge des zu messenden Objekts oder sogar darüber hinaus ausgedehnt ist. Die Ausdehnung senkrecht zur Messrichtung ist entsprechend des Verfahrbereichs senkrecht zur Messrichtung zu wählen.

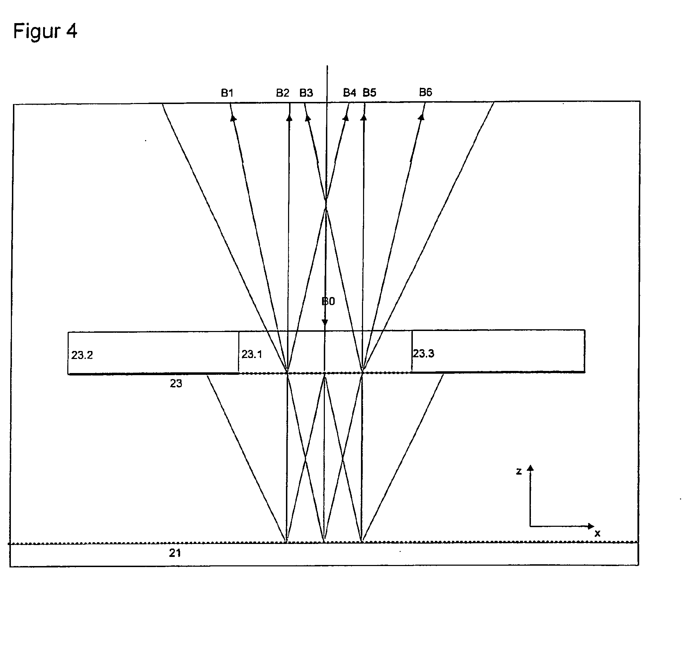

Das Umlenkelement 27, welches ein 45°-Spiegel sein kann, lenkt den Strahl um 90° um, so dass der Lichtstrahl B0 ein erstes Gitter 23 durchdringt. Dieses auch als Abtastgitter 23 bezeichnete erste Gitter ist wie das Umlenkelement 27 senkrecht zur Messrichtung ausgedehnt und fest mit dem zu messenden Objekt verbunden. Die Ausdehnung in Messrichtung ist entsprechend des Umlenkelements 27 zu wählen. Das Abtastgitter 23 weist lange Striche senkrecht zur Messrichtung auf und ist als Transmissionsgitter ausgebildet. Es spaltet den eintretenden Lichtstrahl in mehrere Teilstrahlen auf. Diese Teilstrahlen laufen zu einem zweiten Gitter, auch als Maßstabsgitter 21 bezeichnet. Das Maßstabsgitter ist ausgedehnt in Messrichtung und weist senkrecht zur Messrichtung Striche auf, deren Länge gerade so gewählt ist, dass die auftreffenden Lichtbündel vollständig abgetastet werden können. Die Beschränkung des Maßstabsgitters senkrecht zur Messrichtung ist ein großer Vorteil, da es erhebliche Kosten erzeugt, ausgedehnte Teilungen in zwei Dimensionen zu erzeugen. Am Maßstabsgitter werden aus den Teilstrahlen weitere Teilstrahlen erzeugt. Da das Maßstabsgitter ein Reflexionsgitter ist, werden die Teilstrahlen in Richtung des Abtastgitters zurückgelenkt, welches eine weitere Aufspaltung durchführt. Nach dem Durchdringen des Abtastgitters laufen Teilstrahlenpaare B1, B2, B3, B4, B5, B6 (siehe Figur 4) in definierten, aber teilweise unterschiedlichen Richtungen zurück zum Umlenkelement 27. Dabei hat das Teilstrahlenpaar B2, B5 eine parallele Richtung zum einlaufenden Strahl. Die beiden Teilstrahlen B1, B3 weisen eine gemeinsame Richtung auf, die allerdings von der von B2, B5 abweicht. Die Abweichung wird durch die Teilungsperiode des Abtastgitters bedingt. Die Teilstrahlen B4, B6 weisen wiederum einen gemeinsamen Winkel auf, der invers zu B1, B3 ist.

Das Abtastgitter hat gerade solche Eigenschaften, dass in den verschiedenen Ausbreitungsrichtungen phasenverschobene Signale erzeugt werden, wenn sich das Objekt 20 relativ zum Maßstabsgitter 21 bewegt. Die Teilstrahlen interferieren nach dem Abtastgitter, so dass drei um jeweils 120° verschobene Signale entstehen.

Da die Teilstrahlenpaare in definierter, aber unterschiedlicher Richtung zurück zum Umlenkelement 27 laufen, ist dieses nun so aufgebaut, dass es über Bereiche 27.1, 27.2 und 27.3 verfügt, welche unterschiedliche Umlenkwinkel erzeugen. Dadurch haben alle Teilstrahlenpaare, wenn sie in Richtung der Detektionseinheit 25 zurücklaufen, die gleiche Richtung. Sie sind jedoch räumlich getrennt und können mit Hilfe von Linsen 44.1, 44.2 und 44.3 auf drei Photoelemente 45.1, 45.2 und 45.3 fokussiert werden, wo die phasenverschobenen Signale in phasenverschobene Photoelementströme umgewandelt werden. Schwankungen des Brechungsindex der Luft gehen nicht ein, da sie jeweils beide Bestandteile eines Teilstrahlenpaars in gleicher Weise betreffen und bei der Interferenz herausfallen.

Die Parallelstellung der Teilstrahlenpaare durch das Umlenkelement 27 ist vorteilhaft, da der Abstand Lx zwischen Detektionseinheit und dem zu messenden Objekt zwischen Millimetern und Metern variieren kann. Wenn alle Teilstrahlenpaare mit dem gleichen Winkel umgelenkt würden, wäre der Auftreffort für die Teilstrahlenpaare vom Abstand Lx abhängig bzw. die Teilstrahlenbündel würden für große Lx auf das Maßstabsgitter 21 gelenkt und schließlich die Detektionseinheit 25 nicht erreichen.

Das Umlenkelement 27 weist Bereiche mit unterschiedlicher Umlenkkraft in Messrichtung auf. Hierbei ist es entscheidend, dass Teilstrahlenpaare mit gleicher Phasenverschiebung auf denselben Umlenkbereich gelangen. Das bedeutet, dass am Umlenkelement 27 eine räumliche Trennung der Teilstrahlenpaare mit unterschiedlichen Phasenverschiebungen vorliegen muss.

Der notwendige Versatz der Teilstrahlenpaare in Messrichtung am Umlenkelement 27 kann durch den Abstand Ly des Umlenkelements 27 zum Abtastgitter 23 eingestellt werden. Ly lässt sich mit Hilfe der verwendeten Teilungsperioden von Maßstabs- und Abtastgitter, der Ausdehnung des Beleuchtungsstrahls in Messrichtung und dem Abstand D zwischen den Gittern ermitteln.

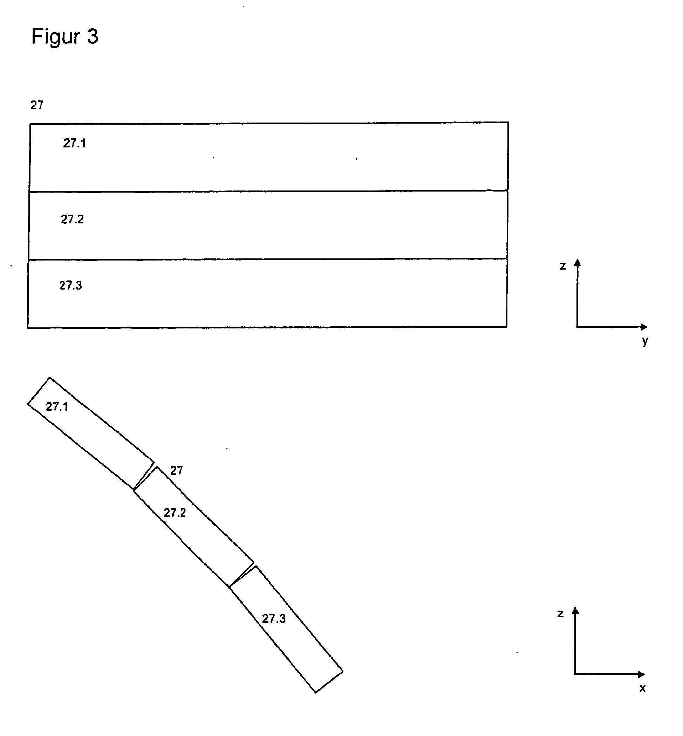

Gemäß Figur 2 und 3 kann es sich bei dem Umlenkelement 27 um einen segmentierten Spiegel handeln. Ein mittleres Element 27.2 weist dann einen planen Spiegel mit einer um den Winkel $\alpha$ geneigten Fläche auf. Zwei äußere Elemente 27.1 bzw. 27.3 weisen jeweils einen planen Spiegel mit einer um den Winkel $\alpha+\beta1$ bzw. $\alpha-\beta2$ geneigten Fläche auf.

Der Winkel $\alpha$ beträgt bezogen auf die Richtung von B0 vorteilhaft 45°, die Winkel $\beta1$ und $\beta2$ hängen von den verwendeten Gitterkonstanten für Abtast- und Maßstabsgitter ab. In der Regel sind $\beta1$ und $\beta2$ gleich ($\beta=\beta1=\beta2$) und bestimmt durch die Gleichung

$$\beta = \frac{1}{2}\arcsin(\frac{\lambda}{TP\_AP}),$$

wobei $\lambda$ Wellenlänge des verwendeten Lichts und TP_AP die Teilungsperiode des Abtastgitters 23 ist.

Der Spiegel kann aus einem Stück gefertigt sein. Er kann jedoch auch aus mehreren beschichteten Lamellen bestehen, die an einem Träger befestigt werden, der die notwendigen Winkel α und β vorgibt. Bezüglich der Spiegelflächen bestehen außer einer hohen Reflektivität keine besonderen Anforderungen.

Im Gegensatz hierzu müssen ausgedehnte Messreflektoren für herkömmliche Interferometer hohe Anforderungen an die Oberflächengüte erfüllen, da Weglängenunterschiede, die durch Oberflächeschwankungen des Messreflektors erzeugt werden, in die Interferenzphase eingehen. Damit ist der erzeugte Positionswert von den Oberflächeneigenschaften des Spiegels des Interferometers abhängig, insbesondere wenn sich das zu messende Objekt senkrecht zur Messrichtung bewegt.

Für den hier vorgeschlagenen segmentierten Umlenkspiegel sind lediglich reduzierte Ebenheits- und Winkeltoleranzen erforderlich, so dass es sich um ein kostengünstig herstellbares Bauteil handelt.

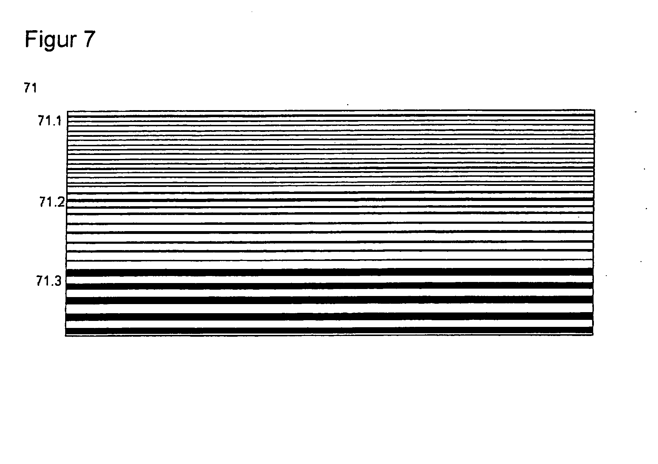

Neben einem rein reflektiv wirkenden Umlenkelement 27 ist auch eines vorstellbar, welches sowohl die Umlenkung durch Reflexion als auch die Umlenkung durch Beugung ausnutzt. Solch ein in Figur 7 dargestelltes Element 71 muss Gitterstrukturen aufweisen, die in Messrichtung unterschiedliche Teilungsperioden für die verschiedenen Umlenkbereiche 71.1, 71.2 und 71.3 haben. Mit den unterschiedlichen Teilungsperioden werden unterschiedliche Umlenkwinkel erzeugt. Zu diesem Zweck kann ein reflektierendes Phasengitter verwendet werden, dass unter einem Winkel γ verkippt steht. Die Gitter sollten möglichst eine starke 1. Ordnung aufweisen, um besonders effektiv zu sein. Dies kann durch mehrstufige Phasengitter realisiert werden.

Im Folgenden soll nun genauer auf die verwendeten Abtast- und Maßstabsgitter für zwei mögliche Ausführungsbeispiele eingegangen werden.

Bei einem ersten Ausführungsbeispiel wird eine Abtastung nach dem sogenannten LIP-Prinzip verwendet, wie es grundlegend beispielsweise in der oben erwähnten EP 0163362 B1 beschrieben ist. Das Abtastgitter hat eine Teilungsperiode von 4 μm und ist als transmittierendes Phasengitter aufgebaut. Der Phasenhub liegt bei 120° und die Gitterstriche sind 1.25 μm breit. Das Maßstabsgitter ist ein reflektierendes Phasengitter mit einer Teilungsperiode von 4 μm und einem Phasenhub von 180° sowie einer Strichbreite von 2 μm. Bei diesen Eigenschaften ergeben sich nach zweimaligem Durchlaufen des Abtastgitters um 120° phasenverschobene Signale S_0°, S_120° und S_240°.

Die beiden Teilstrahlen B2, B5 bilden im Detektor das Signal S_0°, die beiden Teilstrahlen B1, B3 bilden das Signal S_120° und die beiden Teilstrahlen B4, B6 bilden das Signal S_240°.

Bei einer Ausdehnung des Beleuchtungsfelds in Messrichtung von Bx = 2 mm und einem Gitterabstand D = 2 mm ergibt sich für den notwendigen Abstand Ly von Umlenkelement zu Abtastgitter

$$Ly \geq \frac{2D\tan(\arcsin(\lambda/TP\_AP)) + Bx}{\tan(\arcsin(\lambda/TP\_AP))}$$

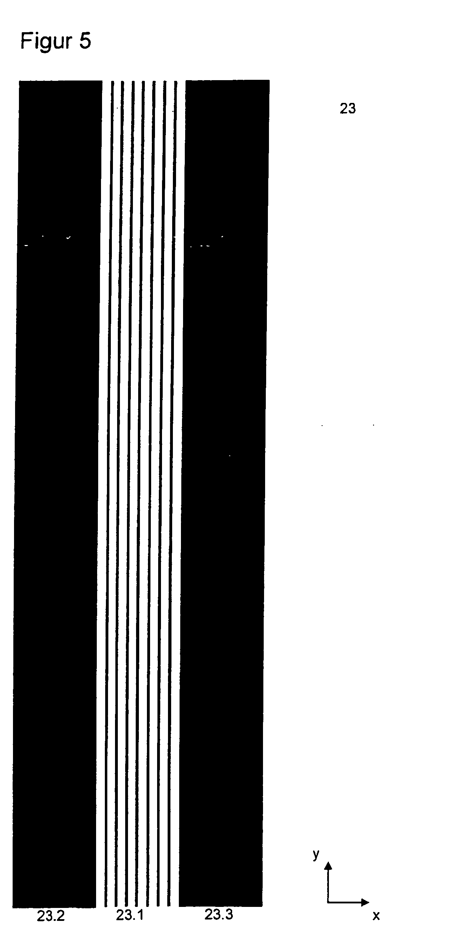

Da weiterhin noch Kipptoleranzen des zu bewegenden Objekts eingehen, sollte die Trennung in Messrichtung am Umlenkelement auch dieses berücksichtigen und dementsprechend Ly größer gewählt werden. Um die Zahl der in Richtung Umlenkelement laufenden Teilstrahlenpaare mit unterschiedlichen Ausbreitungsrichtungen zu begrenzen, sind Blendenstrukturen 23.2 und 23.3 neben dem Abtastgitter 23.1 sinnvoll, wie es in den Figuren 4 und 5 dargestellt ist.

Es ist für beide Ausführungsbeispiele besonders vorteilhaft, die Teilungsstrukturen 23.1 des Abtastgitters 23 auf die Seite des Trägers des Abtastgitters zu legen, die dem Maßstabsgitter 21 zugewandt ist. Der effektive Messpunkt des Messsystems liegt im Abtastgitter und somit befindet sich dieser möglichst nahe am Centerpoint 19.

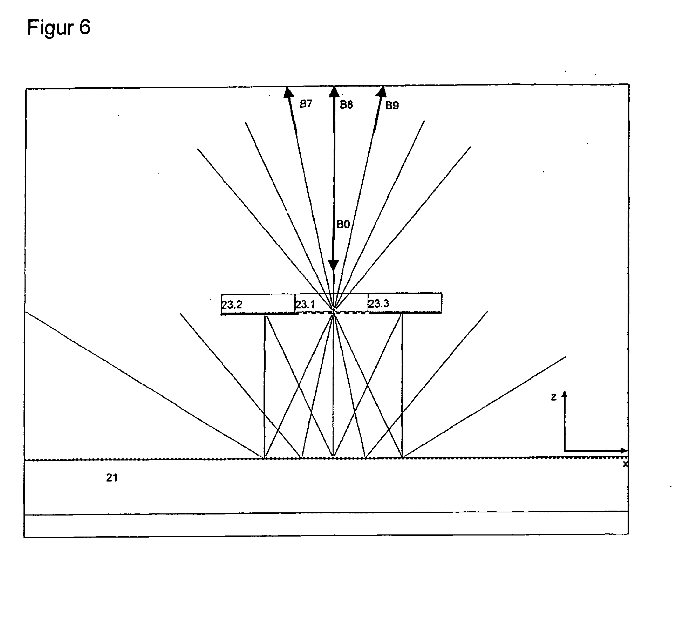

Figur 6 zeigt ein weiteres Ausführungsbeispiel. Hier wird eine Abtastung entsprechend der Littrow-Anordnung verwendet.

Das Abtastgitter hat eine Teilungsperiode von 4 μm und ist als transmittierendes Phasengitter aufgebaut. Der Phasenhub liegt bei 120° und die Striche sind 1.25 μm breit. Das Maßstabsgitter ist ein reflektierendes Phasengitter mit einer Teilungsperiode von 2 μm und einem Phasenhub von 180° sowie einer Strichbreite von 1 μm. Bei diesen Eigenschaften ergeben sich nach zweimaligem Durchlaufen des Abtastgitters um 120° phasenverschobene Signale S_0°, S_120° und S_240° im Detektor.

Das Teilstrahlenpaar B8 bildet das Signal S_0°, das Teilstrahlenpaar B7 bildet das Signal S_120° und das Teilstrahlenpaar B9 bildet das Signal S_240°.

Da bei einer Littrow-Anordnung die 0. Beugungsordnung des ersten Gitters nicht erwünscht ist (sie führt zu Subharmonischen), muss der Gitterabstand D und die Ausdehnung der Beleuchtung in Messrichtung so gewählt werden, dass Teilstrahlen, die aus einer 0. Ordnung am Abtastgitter hervorgehen, nach der Beugung am Maßstab durch nicht transmittierende Bereiche neben dem Abtastgitter geblockt werden. Somit sind auch für dieses Ausführungsbeispiel Blendenstrukturen 23.2 und 23.3 neben dem Abtastgitter 23.1 sinnvoll.

**Patentansprüche**

1. Positionsmesseinrichtung mit einer Lichtquelle (41), einem ersten Gitter (23), einem zweiten Gitter (21) und einem Detektor (25) mit Photoelementen (45.1, 45.2, 45.3), wobei Licht der Lichtquelle (41), das am ersten und zweiten Gitter (23, 21) eine Aufspaltung in Teilstrahlen (B1 - B6, B7 - B9) verschiedener Richtung erfahren hat, über ein Umlenkelement (27) zum Detektor (45.1, 45.2, 45.3) gelenkt wird, und wobei das Umlenkelement (27) und das erste Gitter (23) zusammen mit einem zu messenden Objekt (10, 20) bewegt werden, und das zweite Gitter (21) mit der Lichtquelle (41) und dem Detektor (25) demgegenüber ortsfest sind, und wobei das erste Gitter (23) als Abtastgitter senkrecht zu einer Messrichtung (X) ausgedehnt ist, während das zweite Gitter (21) als Maßstabsgitter in Messrichtung (X) ausgedehnt ist, **dadurch gekennzeichnet, dass** das Umlenkelement (27) für parallel einfallende und miteinander interferierende Teilstrahlenpaare (B1 - B6, B7 - B9) mit unterschiedlicher Richtung unterschiedliche Bereiche (27.1, 27.2, 27.3, 71.1, 71.2, 71.3) aufweist, so dass alle vom Umlenkelement (27) zu den Photoelementen (45.1, 45.2, 45.3) gelenkten Teilstrahlen (B1 - B6, B7 - B9) räumlich getrennt und parallel sind.

2. Positionsmesseinrichtung nach Anspruch 1, **dadurch gekennzeichnet, dass** die unterschiedlichen Bereiche (27.1, 27.2, 27.3) unterschiedlich geneigte Spiegelflächen eines segmentierten Spiegels sind.

3. Positionsmesseinrichtung nach Anspruch 2, **dadurch gekennzeichnet, dass** ein Neigungsunterschied ($\beta$) zwischen den Spiegelflächen konstant ist.

4. Positionsmesseinrichtung nach Anspruch 2 oder 3, **dadurch gekennzeichnet, dass** der segmentierte Spiegel aus mehreren beschichteten Lamellen besteht, die auf einem Träger befestigt sind, der unterschiedliche Neigungen vorgibt.

5. Positionsmesseinrichtung nach Anspruch 2 oder 3, **dadurch gekennzeichnet, dass** der segmentierte Spiegel aus einem Stück gefertigt ist.

6. Positionsmesseinrichtung nach Anspruch 1, **dadurch gekennzeichnet, dass** die unterschiedlichen Bereiche (71.1, 71.2, 71.3) Gitterstrukturen mit jeweils unterschiedlichen Teilungsperioden aufweisen.

7. Positionsmesseinrichtung nach Anspruch 6, **dadurch gekennzeichnet, dass** die Gitterstrukturen der unterschiedlichen Bereiche (71.1, 71.2, 71.3) reflektierende Phasengitter sind.

8. Positionsmesseinrichtung nach Anspruch 6 oder 7, **dadurch gekennzeichnet, dass** die Gitterstrukturen der unterschiedlichen Bereiche (71.1, 71.2, 71.3) mehrstufige Phasengitter sind.

9. Positionsmesseinrichtung nach einem der vorhergehenden Ansprüche, **dadurch gekennzeichnet, dass** ein Bereich (27.2, 71.2) des Umlenkelements (27) das Licht der Lichtquelle (41) zum ersten Gitter (23) lenkt.

10. Positionsmesseinrichtung nach einem der vorhergehenden Ansprüche, **dadurch gekennzeichnet, dass** das erste Gitter (23) ein transmittierendes Phasengitter ist.

11. Positionsmesseinrichtung nach einem der vorhergehenden Ansprüche, **dadurch gekennzeichnet, dass** das zweite Gitter (21) ein reflektierendes Phasengitter ist, das das vom ersten Gitter (23) transmittierte Licht auf das erste Gitter (23) zurück reflektiert.

12. Positionsmesseinrichtung nach einem der vorhergehenden Ansprüche, **dadurch gekennzeichnet, dass** beidseits der ersten Gitterstrukturen (23.1) Blendenstrukturen (23.2, 23. 3) angeordnet sind, die vom zweiten Gitter (21) reflektiertes Licht teilweise abblocken.

13. Positionsmesseinrichtung nach einem der vorhergehenden Ansprüche, **dadurch gekennzeichnet, dass** das Umlenkelement (27) drei unterschiedliche Bereiche (27.1, 27.2, 27.3, 71.1, 71.2, 71.3) aufweist, von denen Licht auf drei räumlich getrennten und parallelen Wegen auf drei Photodetektoren (45.1, 45.2, 45.3) fällt.

14. Positionsmesseinrichtung nach Anspruch 13, **dadurch gekennzeichnet, dass** in den drei Photodetektoren (45.1, 45.2, 45.3) um 120 Grad gegeneinander phasenverschobene Signale entstehen.

**Claims**

1. Position measuring device comprising a light source (41), a first grating (23), a second grating (21) and a detector (25) with photoelements (45.1, 45.2, 45.3), wherein light of the light source (41), which has been split into partial beams (B1-B6, B7-B9) of different direction at the first and second gratings (23, 21), is directed to the detector (45.1, 45.2, 45.3) via a deflecting element (27), and wherein the deflecting element (27) and the first grating (23) are moved together with an object (10, 20) to be measured, and the second grating (21) with the light source (41) and the detector (25) are, in contrast, fixed in location, and wherein the first grating (23) is extended as scanning grating perpendicular to a measurement direction (X), while the second grating (21) is extended as scale grating in the measurement direction (X), **characterized in that** the deflecting element (27) has different regions (27.1, 27.2, 27.3, 71.1, 71.2, 71.3) for partial beam pairs (B1-B6, B7-B9) which are incident in parallel and interfere with one another, the beam pairs (B1-B6, B7-B9)being of different direction, such that all partial beams (B1-B6, B7-B9) directed by the deflecting element (27) to the photoelements (45.1, 45.2, 45.3) are spatially separated and parallel.

2. Position measuring device according to Claim 1, **characterized in that** the different regions (27.1, 27.2, 27.3) are differently inclined reflecting faces of a segmented mirror.

3. Position measuring device according to Claim 2, **characterized in that** a difference in the incline (β) between the reflecting faces is constant.

4. Position measuring device according to Claim 2 or 3, **characterized in that** the segmented mirror comprises a plurality of coated lamellae which are fastened on a carrier and prescribe different inclinations.

5. Position measuring device according to Claim 2 or 3, **characterized in that** the segmented mirror is made from a single piece.

6. Position measuring device according to Claim 1, **characterized in that** the different regions (71.1, 71.2, 71.3) have grating structures with different division periods in each case.

7. Position measuring device according to Claim 6, **characterized in that** the grating structures of the different regions (71.1, 71.2, 71.3) are reflecting phase gratings.

8. Position measuring device according to Claim 6 or 7, **characterized in that** the grating structures of the different regions (71.1, 71.2, 71.3) are multistage phase gratings.

9. Position measuring device according to one of the preceding claims, **characterized in that** a region (27.2, 71.2) of the deflecting element (27) directs the light of the light source (41) to the first grating (23).

10. Position measuring device according to one of the preceding claims, **characterized in that** the first grating (23) is a transmitting phase grating.

11. Position measuring device according to one of the preceding claims, **characterized in that** the second grating (21) is a reflecting phase grating which retroreflects onto the first grating (23) the light transmitted by the first grating (23).

12. Position measuring device according to one of the preceding claims, **characterized in that** there are arranged on both sides of the first grating structures (23.1) diaphragm structures (23.2, 23.3) which partially block light reflected by the second grating (21).

13. Position measuring device according to one of the preceding claims, **characterized in that** the deflecting element (27) has three different regions (27.1, 27.2, 27.3, 71.1, 71.2, 71.3) from which light on three spatially separate and parallel paths falls on three photodetectors (45.1, 45.2, 45.3).

14. Position measuring device according to Claim 13, **characterized in that** signals phase-shifted relative to one another by 120 degrees are produced in the three photodetectors (45.1, 45.2, 45.3).

## Revendications

1. Dispositif de mesure de position comportant une source de lumière (41), un premier réseau (23), un second réseau (21) et un détecteur (25) comportant des éléments photoélectriques (45.1, 45.2, 45.3), dans lequel la lumière provenant de la source de lumière (41) ayant subi sur les premier et second réseaux (23, 21) une séparation en faisceaux partiels (B1 - B6, B7 - B9) de directions différentes est dirigée par l'intermédiaire d'un élément de déviation (27) vers le détecteur (45.1, 45.2, 45.3), et dans lequel l'élément de déviation (27) et le premier réseau (23) sont déplacés ensemble avec un objet à mesurer (10, 20) alors que le second réseau (21), la source de lumière (41) et le détecteur (25) sont quant à eux en position fixe, et dans lequel le premier réseau (23) se prolonge en tant que réseau de balayage perpendiculairement à la direction de mesure (X), tandis que le second réseau (21) se prolonge en tant que réseau de mesure dans la direction de mesure (X), **caractérisé en ce que** l'élément de déviation (27) présente des régions différentes (27.1, 27.2, 27.3, 71.1, 71.2, 71.3) pour des paires de faisceaux partiels incidents parallèlement et interférant les uns avec les autres (B1 - B6, B7 - B9) ayant des directions différentes, de sorte que tous les faisceaux partiels (B1 - B6, B7 - B9) déviés par l'élément de déviation (27) vers les éléments photoélectriques (45.1, 45.2, 45.3) soient séparés spatialement et parallèles.

2. Dispositif de mesure de position selon la revendication 1, **caractérisé en ce que** les régions différentes (27.1, 27.2, 27.3) sont des surfaces de miroir d'inclinaisons différentes d'un miroir segmenté.

3. Dispositif de mesure de position selon la revendication 2, **caractérisé en ce qu'**une différence d'inclinaison (ß) entre les surfaces de miroir est constante.

4. Dispositif de mesure de position selon la revendication 2 ou 3, **caractérisé en ce que** le miroir segmenté comprend une pluralité de lamelles revêtues qui sont montées sur un support définissant des inclinaisons différentes.

5. Dispositif de mesure de position selon la revendication 2 ou 3, **caractérisé en ce que** le miroir segmenté est constitué d'une seule pièce.

6. Dispositif de mesure de position selon la revendication 1, **caractérisé en ce que** les différentes régions (71.1, 71.2, 71.3) présentent des structures de réseau ayant des périodes de division différentes.

7. Dispositif de mesure de position selon la revendication 6, **caractérisé en ce que** les structures de réseau des différentes régions (71.1, 71.2, 71.3) sont des réseaux de phase de réflexion.

8. Dispositif de mesure de position selon la revendication 6 ou 7, **caractérisé en ce que** les structures de réseau des différentes régions (71.1, 71.2, 71.3) sont des réseaux de phase à plusieurs étages.

9. Dispositif de mesure de position selon l'une quelconque des revendications précédentes, **caractérisé en ce qu'**une région (27.2, 71.2) de l'élément de déviation (27) oriente la lumière provenant de la source de lumière (41) vers le premier réseau (23).

10. Dispositif de mesure de position selon l'une quelconque des revendications précédentes, **caractérisé en ce que** le premier réseau (23) est un réseau de phase de transmission.

11. Dispositif de mesure de position selon l'une quelconque des revendications précédentes, **caractérisé en ce que** le second réseau (21) est un réseau de phase de réflexion qui rétro-réfléchit la lumière transmise par le premier réseau (23) sur le premier réseau (23).

12. Dispositif de mesure de position selon l'une quelconque des revendications précédentes, **caractérisé en ce que** des deux côtés des premières structures de réseau (23.1) sont disposées des structures d'obturation (23.2, 23.3) qui occultent partiellement la lumière réfléchie par le second réseau (21).

13. Dispositif de mesure de position selon l'une quelconque des revendications précédentes, **caractérisé en ce que** l'élément de déviation (27) présente trois régions différentes (27.1, 27.2, 27.3, 71.1, 71.2, 71.3) à partir desquelles la lumière est incidente suivant trois chemins séparés spatialement et parallèles sur trois photodétecteurs (45.1, 45.2, 45.3).

14. Dispositif de mesure de position selon la revendication 13, **caractérisé en ce que** des signaux déphasés de 120 degrés se forment dans les trois photodétecteurs (45.1, 45.2, 45.3).

Figur 0

Figur 1

Figur 2

## Figur 3

27

27.1

27.2

27.3

z ↑ → y

27.1

27

27.2

27.3

z ↑ → x

## Figur 4

## Figur 5

23

23.2     23.1     23.3

y

x

Figur 6

## Figur 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0163362 B1
- US 5760959 A
- WO 2007034379 A2